# EUROPEAN PATENT APPLICATION

(11) **EP 1 482 674 A1**
(43) Date of publication of application: **01.12.2004**
(21) Application number: 04252935.4
(22) Date of filing: 18.05.2004
(51) Int. Cl.: H04L 12/26, H04M 7/00

(54) **Call assurance test in an IP network**

(30) Priority: 30.05.2003 US 448595
(71) Applicant: LUCENT TECHNOLOGIES INC., Murray Hill, New Jersey 07974-0636 (US)
(72) Inventor: Makowski, Steven L., Naperville, Illinois 60540 (US); Tomasino, Peter C., St. Charles, Illinois 60174 (US)
(74) Representative: Watts, Christopher Malcolm Kelway, Dr.

(57) **Abstract**

The invention provides a process for preparing 1-methylindazole-3-carboxylic acid of formula (I): 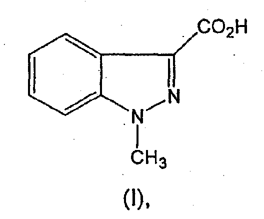 which comprises reacting a methylating agent with indazole-3-carboxylicacid of formula (VI): 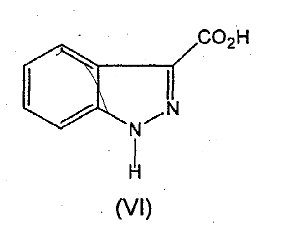 in the presence of an alkaline earth metal oxide or alkoxide in an appropriate solvent. Also provided is a process for producing Granisetron, using the method of the present invention for producing 1-methylindazole-3-carboxylic acid.

## Description

### BACKGROUND

The present invention relates to a method of ensuring connectivity between the originating and terminating endpoints for a bearer path in an Internet Protocol (IP) network, and more particularly to a method of providing bearer path assurance during call set-up in an IP network.

A bearer path, which can also be known as a voice path, is created between the originating and terminating endpoints to enable a calling and called party to communicate across a communications network. In a TDM communications network, a channel or circuit is dedicated to the bearer path for the duration of the call. Network operators have central offices which include a large number of lines, or trunks, which connect to other central offices via in interoffice connection across the network to provide circuits for these calls.

Network operators routinely test the trunks on a regular basis using a bearer path assurance test, also known as a voice path assurance test, which may also be known as a continuity test. A bearer path assurance test verifies the establishment of the bearer path, that is whether the tested trunk can provide the interoffice connection necessary to establish the bearer path. Typically a transponder is connected at the originating office and a loop-back is established at the terminating office. Echo cancellers are disabled and one or more test tones are applied at the originating office using the transponder. The one or more tones travel to the terminating office and are looped back to the originating office. The one or more returning test tones are verified to ensure that the bearer path was established. Also, the one or more test tones sent between offices are measured, such as for example at the originating office or at both the originating and terminating offices to determine attenuation or loss of signal level. If the continuity test fails or losses exceed a predetermined level the trunk does not pass the bearer path assurance test.

In today's central offices, bearer path assurance testing is typically automated and can be provisioned to be performed for a predetermined percentage of all outgoing calls that are made. However, providing known bearer path assurance tests for a large percentage of calls requires a substantial amount of test equipment and is thus cost prohibitive. Also, known bearer path assurance tests are too time consuming to be performed for a large percentage of calls. Attempting to include a known bearer path assurance test during every call set-up would significantly degrade the performance of the communications network.

IP communication networks do not provide a dedicated circuit for the bearer path for each call. Instead, different portions of the voice data, referred to as bearer packets, can travel from one endpoint to the other via different routes. It is desirable to provide bearer path assurance testing for IP networks which is quick and cost effective.

### SUMMARY OF THE INVENTION

According to the present invention, a method of assuring a bearer path, which can also be known as a voice path, across a packet-based IP network is provided.

In accordance with a first aspect of the invention; the method includes establishing a bearer path across the IP network and performing a bearer path assurance test.

In accordance with a second aspect of the invention, the method includes performing the bearer path assurance test during call setup before cutting through the call.

In accordance with another aspect of the invention, the bearer path assurance test can include sending a message from the originating office to a terminating office, and receiving a reply to the message at the originating office.

In accordance with another aspect of the invention, the bearer path assurance test can also include creating a timestamp at the originating office, sending the timestamp from the originating office to a terminating office, receiving the timestamp at the originating office.

In accordance with another aspect of the invention, the method can also include evaluating the continuity of the bearer path.

In accordance with another aspect of the invention, the method can also include evaluating round trip delay of the bearer path.

In accordance with another aspect of the invention, the method can also include evaluating packet loss of the bearer path.

Other features, benefits and advantages of this invention will become apparent to those skilled in the art from the following detailed description of the preferred embodiments, when read in light of the accompanying drawings.

### BRIEF DESCRIPTION OF THE DRAWINGS

The invention may take form in certain components and structures, preferred embodiments of which will be illustrated in the accompanying drawings wherein:
Fig. 1 illustrates a portion of a communications network including an IP network in accordance with the invention;
Fig. 2 illustrates steps of the invention;
Fig. 3 illustrates the testing step in accordance with the invention;
Fig. 4 illustrates the testing step in accordance with the invention;
Fig. 5 illustrates the message flow for an embodiment of the invention; and
Fig. 6 illustrates the message flow for another embodiment of the invention;

### DETAILED DESCRIPTION OF THE INVENTION

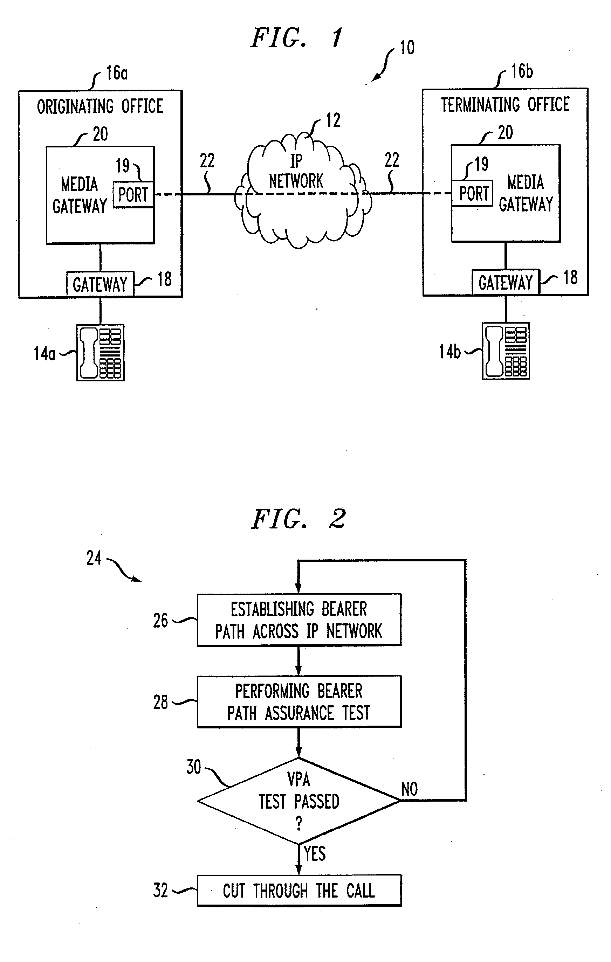

Referring now to Fig. 1, a portion of a packet-based IP communications network is shown generally at 10. The IP communications network 10 includes an IP network 12. An originating party 14a, also known as a calling party, is connected to a called party 14b, also known as the terminating party across the IP network 12. The communications network 10 also includes an originating central office, also known as the originating office 16a, serving the calling party 14a and a terminating central office, also known as the terminating office 16b, serving the called party 14b. It should be understood that the originating office 16a can be connected to a plurality of different terminating offices 16b, only one of which is shown here for simplicity. The offices 16a, 16b are typically connected to the network 12 via logical ports 19, though any suitable known connection can be used.

The calling party 14a is connected to the originating office 16a, and the called party 14b is connected to the terminating office 16b in any suitable known manner such as by a line access gateway 18. A line access gateway 18 can support any suitable form of connection including but not limited to Plain Old Telephone Service (POTS), ISDN, an IP network for an IP phone, etc.

The central offices 16a, 16b each include a Media Gateway 20 for providing a media connection across the IP network 12, such as a bearer path 22, which enables the calling party 14a and called party 14b to communicate with each other during a call. The bearer path 22, which can also be known as a voice path, can carry voice information, or media, or other data across the IP network 12.

As described in detail below, the invention includes a method of assuring a bearer path which can include one or more of evaluating continuity of the bearer path, evaluating round trip delay of bearer packets along the bearer path, and evaluating packet loss of the bearer path.

Referring now to Fig. 2, a method of assuring a bearer path across a packet-based IP network 12 is shown generally at 24. The method 24 includes establishing a bearer path 22 between the originating and terminating central offices 16a, 16b across the IP network 12. The method 24 also includes performing a bearer path assurance test at 28 during call setup before cutting through the call. If the bearer path passes the bearer path assurance test at 30, the call is cut through at 32. If the bearer path does not pass the bearer path assurance test, a new bearer path can be established at 26.

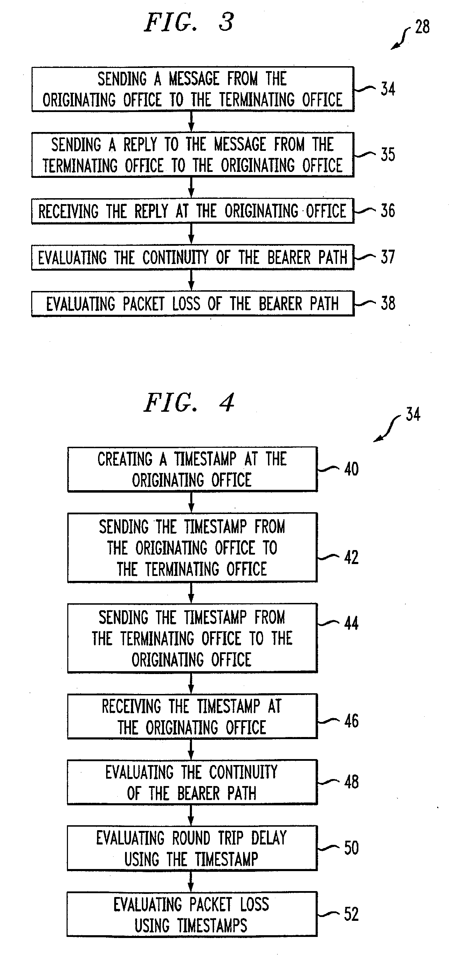

Referring now to Fig. 3 the step of performing the bearer path assurance test at 28 can include the steps of sending a message from the originating office to a terminating office at 34, sending the reply to the message from the terminating office to the originating office at 35. The step of performing the bearer path assurance test at 28 can also include receiving the message at the originating office at 36 and evaluating the continuity of the bearer path at 37. If the reply is received at the originating office 16a, the continuity of the bearer path can be verified. If no reply is received, there is no continuity to the bearer path. The step of performing the bearer path assurance test at 28 can also include evaluating packet loss of the bearer path at 38. If the number of replies received does not correspond to the number of messages sent packet loss can be determined by the difference.

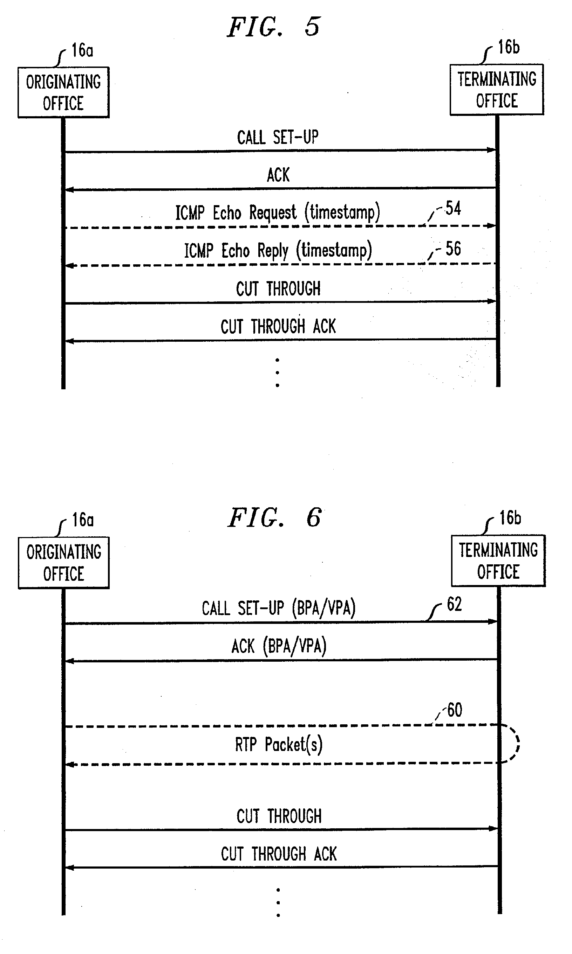

Timestamps can be used in the messages sent at 34 for performing the bearer path assurance test. Referring to Fig. 4, the step of performing the bearer path assurance test at 28 can include the steps of creating a timestamp at the originating office at 40 and sending the timestamp from the originating office to a terminating office at 42. The timestamp can be included in a message so that the step of sending a message at 34 can include sending the timestamp as shall be described in further detail below. The step of performing the bearer path assurance test at 28 can also include sending the timestamp from the terminating office to the originating office at 44 and receiving the timestamp at the originating office at 46. The timestamp can be included in the reply sent at 35 and thus received in the reply at 36 above. The step of performing the bearer path assurance test at 28 can also include evaluating the continuity of the bearer path at 48. When the timestamp from the originating office 16a is received back at the originating office the continuity of the bearer path can be verified. If it is not received by the originating office 16a, there is no continuity to the bearer path.

The step of performing the bearer path assurance test at 28 can also include evaluating round trip delay using the timestamp at 50. Round trip delay can be determined by comparing the timestamp sent by the originating office with the time that the timestamp was received back at the originating office. The difference in time between the time of the timestamp and the time the timestamp was received at the originating office will approximately equal the round trip delay.

If the round trip delay is less than a predetermined threshold, the bearer path tested passes the bearer path assurance test at 30 and the call is cut through. If the round trip delay exceeds a predetermined threshold, such as for example hundreds of milliseconds, the bearer path tested does not pass the bearer path assurance test at 30 and the call will not be cut through. Typically, if the bearer path does not pass, a different bearer path is established at 26 and another bearer path assurance test can be performed 28.

Referring now to Fig. 5 a message flow between the originating office 16a and the terminating office 16b during call set-up illustrates a first embodiment of the invention including the steps of performing the bearer path assurance test. The bearer path assurance test performed in the first embodiment includes including a timestamp in an echo message and sending the echo message from the originating office 16a to the terminating office 16b at 54. The echo message can be any echo message suitable for transmission between central offices 16a, 16b such as for example an ICMP Echo Request shown at 54. The timestamp can be generated in any suitable known manner and can be included in the data field of the ICMP Echo Request.

The bearer path assurance test also includes sending a reply from the terminating office 16b to the originating office 16a containing the originating office timestamp at 56. In accordance with the Internet Control Message Protocol (ICMP) Internet Program Protocol Specification, the data received in the ICMP Echo Request by the terminating office 16b is returned in the ICMP Echo Reply. Placing the timestamp from the originating office 16a in the optional data field of the ICMP Echo Request results in an ICMP Echo Reply message which also contains the timestamp generated be the originating office 16a.

Reception of the ICMP ECHO Reply containing the timestamp by the originating office 16a verifies continuity of the bearer path between IP address endpoints, typically corresponding to the Media Gateways 20. The bearer path assurance test used in the first embodiment does not verify continuity between logical ports 19. However, determining proper continuity between Gateways 20 results in a high probability of proper continuity between logical ports 19 since there is a high probability that these endpoints have been properly established during call set-up.

The bearer path assurance test using a timestamp in the ICMP Echo Request and Echo Reply as shown in the first embodiment does not require the use of the ISUP Multipurpose Internet Mail Extensions (MIME) to create a loopback for sending the timestamp back to the originating office 16a. Instead, the ICMP Echo Reply will include the timestamp and be sent in reply to the Echo Request message in accordance with ICMP standards. The terminating office, therefore does not even need to be alerted that the bearer path assurance test is being run, simplifying testing procedures.

As described at step 50, the bearer path assurance test can also include evaluating the round trip delay for data sent along the bearer path 22 from the originating office 16a to the terminating office 16b and then back to the originating office. The round trip delay can be determined to be approximately equal to the duration from the time of the timestamp to the time the timestamp was received at the originating office 16a. The round trip delay can be determined in this manner using the timestamp in the ICMP Echo Request message and receiving the timestamp back at the originating office 16a in the ICMP Echo Reply message as described above.

Referring again to Fig. 4, the bearer path assurance test can also include evaluating packet loss at 52 by sending a plurality of time stamps in a plurality of corresponding messages. Each message having a time stamp can include a sequence number to uniquely identify that particular message. If the number of timestamps sent by the originating office 16a does not equal the number of timestamps received by the originating office it can be determined that packet loss has occurred. Comparisons of the number of timestamps sent with the number of timestamps received can determine the amount of packet loss that has occurred. For example, a plurality of time stamps N_{REQ}, each timestamp being included in a corresponding Echo Request, can be sent by the originating office 16a. The number of timestamps N_{RES}, received by the originating office 16a in Echo Replies, can be compared with the number of timestamps N_{REQ} to determine packet loss.

Referring now to Fig. 6 another embodiment is shown illustrating a message flow between the originating office 16a and the terminating office 16b during call set-up. The bearer path assurance test is performed by including a time stamp in an RTP packet at 60. A set-up message with a bearer path assurance test indicator alerts the terminating office 16b to the need for a loopback of the RTP packet during call setup. Any appropriate protocol used in call-setups can be used. In this example, which should not be considered as limiting, a CALL SET-UP message at 62 alerts the terminating office to the need for the loopback.

The bearer path assurance test performed by this embodiment verifies connection to the logical port, such as the logical port 19, in the terminating office Gateway 20. The continuity is evaluated in a similar manner as described above, by receiving the timestamp contained in the RTP packet back at the originating office 16a. The roundtrip delay is also measured in a similar manner as the first embodiment described above. Similarly, packet loss can be evaluated and measured by sending several RTP packets each containing a timestamp in a similar manner as described above.

The bearer path assurance test of the invention does not require external transponders and thus significantly reduces the equipment costs. The bearer path assurance test of the invention does not require control of echo cancellers as compared to known bearer path assurance tests which require echo cancellers to be turned off during testing. The bearer path assurance test of the invention can be performed in significantly less time than known bearer path assurance tests. As a result, the bearer path assurance test of the invention can be performed on all calls, or substantially all calls, set-up by the originating office if desired without slowing down real-time call processing in the office 16a. Substantially all calls includes a very high percentage of all calls, such as 98% to 99%, or more than 99% and approaching 100% of the calls set-up by the originating office 16a. The bearer path assurance test can, alternatively, be performed for any other suitable percentage of calls set-up by the originating office 16a.

The invention has been described with reference to preferred embodiments. Obviously, modifications and alterations will occur to others upon reading and understanding the preceding specification. It is intended that the invention be construed as including all such modifications and alterations insofar as they come within the scope of the appended claims or the equivalents thereof.

## Claims

1. A method of assuring a bearer path across a packet-based Internet Protocol (IP) network at an originating office comprising:
establishing a bearer path across the IP network;
performing a bearer path assurance test during call setup.

2. The method defined in claim 1 wherein the performing step further comprises:
performing a bearer path assurance test for substantially every outgoing call originating at the originating office before cutting through the call without slowing down call processing at the originating office.

3. The method defined in claim 1 wherein the performing step further comprises:
sending a message from the originating office to the terminating office; and
receiving a reply at the originating office.

4. The method defined in claim 1 wherein the performing step further comprises:
creating a timestamp at the originating office;
sending the timestamp from the originating office to a terminating office; and
receiving the timestamp at the originating office.

5. The method defined in claim 4 wherein the performing step further comprises:
evaluating round trip delay using the timestamp.

6. The method defined in claim 4 wherein the performing step further comprises:
including the timestamp in an echo message, wherein the step of sending the timestamp from the originating office to the terminating office includes sending the echo message containing the time stamp; and
including the timestamp in a reply to the echo message, wherein the step of receiving the timestamp at the originating office includes receiving an echo reply containing the timestamp at the originating office.

7. The method defined in claim 6 wherein the step of including the timestamp in an echo message further comprises:
including the timestamp in the data portion of the echo message.

8. The method defined in claim 4 further comprising:
including the timestamp in an RTP packet, wherein the step of sending the timestamp from the originating office to the terminating office includes sending the RTP packet containing the time stamp, and the step of receiving the timestamp at the originating office includes receiving the RTP packet containing the time stamp.

9. The method defined in claim 4 further comprising:
creating a loopback for sending the RTP packet from the terminating office to the originating office.

10. The method defined in claim 3 further comprising:
sending several messages from the originating office to the terminating office;
receiving replies corresponding to the several messages at the originating office; and
evaluating packet loss by comparing the number of messages sent to the number of replies received.
